# EUROPEAN PATENT SPECIFICATION

(11) **EP 3 264 548 B1**
(45) Date of publication and mention of the grant of the patent: **16.03.2022**
(21) Application number: 17179055.3
(22) Date of filing: 30.06.2017
(51) Int. Cl.: H02G 3/18

(54) **UNIVERSAL MOUNTING RING**
UNIVERSELLER HALTERUNGSRING
BAGUE DE MONTAGE UNIVERSEL

(30) Priority: 01.07.2016 US 201615201020
(43) Date of publication of application: 03.01.2018
(73) Proprietor: ASSA ABLOY AB, 107 23 Stockholm (SE)
(72) Inventor: PADILLA, Toby, Lakewood, CO Colorado 80227 (US); BOUSFIELD, Randall, Arvada, CO Colorado 80234 (US)
(74) Representative: Kramer Barske Schmidtchen Patentanwälte PartG mbB

(56) References cited:
- EP-A2- 2 802 050
- DE-A1- 4 000 562
- DE-A1- 10 227 398
- DE-U1- 29 911 298
- DE-U1-202004 015 082
- US-A1- 2009 205 864
- US-E- R E35 735

## Description

### FIELD OF THE INVENTION

The present application relates to a universal adapter to permit mounting of an electronic device, such as a contact or contactless reader, miniature controller, door interface module or other electronic device in an electrical enclosure, such as a conventional electrical junction box. The adapter further allows variable positioning of the electronic device or reader within the enclosure and accommodates a wide variety of cover plates to enhance aesthetic finishes.

### BACKGROUND OF THE INVENTION

Contactless radio frequency identification (RFID) systems typically include at least one reader and a plurality of transponders, which are commonly termed credentials, cards, tags or the like. The transponder may be an active or passive radio frequency communication device which is directly attached to or embedded in an article to be identified or otherwise characterized by the reader. Alternatively, the transponder may be embedded in a portable substrate, such as a card or tag, carried by a person to be identified or otherwise characterized by the reader.

Communication between the reader and transponder is enabled by cooperative resident circuits which are provided in each reader and transponder. The resident circuit of a reader typically includes an inductor and a capacitor. The capacitor is coupled in series between the inductor and a signal driver. The inductor is usually in the form of an antenna coil which is capable of magnetically coupling to an inductor in the resonant circuit of a compatible transponder through mutual inductance. The communication is initiated when a transponder is proximately positioned relative to the reader. The reader has a power supply which conveys a current to the reader resident circuit, causing the reader antenna to produce an excitation signal in the form of an electromagnetic field. The excitation signal couples to the antenna of the proximately positioned transponder through mutual inductance and the excitation signal powers and clocks the transponder circuitry initiating operation of the transponder. These components are typically mounted on a board, such as a printed circuit board.

The transponder operation comprises the generation of a response signal at a specified frequency and transmission of the resulting transponder's response signal back to the reader. In particular, the transponder resonant circuit receives a current and responds to the excitation signal which causes the transponder antenna to produce a response signal in the form of an electromagnetic field. The response signal couples to the reader antenna through mutual inductance in substantially the same manner as described above with respect to coupling of the excitation signal to the transponder antenna.

An important operating parameter of the reader is the range of the reader when communicating with a transponder. The range of a reader is *inter alia* strongly affected by the strength of the electromagnetic field generated by the reader resonant circuit. In order to generate a field strength which provides the reader with adequate range, the designer of the reader must properly specify a resonant circuit that is appropriately tuned to a predetermined frequency for the desired application of the RFID system. The range of the reader is often altered by characteristics of the operating environment in which the reader resides. In a typical case where the reader is mounted in a fixed location on a support structure, the range of the reader is susceptible to the materials of the mounting location and other objects within the operating environment. For example, if the mounting location of a reader is in an operating environment which includes nearby metal, the metal can de-tune the resonant circuit of the reader from the predetermined frequency and drastically reduce the range of the reader. For these reasons, it is often desirable to pot a reader in a plastic housing with an epoxy and mount the reader to a wall, away from metal objects. While this approach is desirable from a functional standpoint, it is often undesirable from an aesthetic standpoint as the housing provides an unacceptable finished look. For example, the reader housing protrudes from the surface of a wall an unacceptable distance and/or utilizes a cover plate designed solely for the reader but which may not aesthetically match the cover plates used throughout the building and particularly nearby space. Additionally, because the reader is potted in the plastic housing, the housing cannot be changed.

Document EP2802050A2 discloses a universal mounting ring having an arcuate or curved upper portion and a plurality of downwardly depending tabs.

DE 299 11 298 U1 and DE 40 00 562 A1 disclose other mounting rings.

### SUMMARY OF THE INVENTION

In accordance with the present disclosure, a universal mounting ring is provided for securing an electronic device, for example, a radio frequency identification (RFID) reader, within an electrical enclosure. It should be appreciated that the universal mounting ring may also secure other types of readers, including contact and contactless readers, and other types of electronic devices, such as a miniature controller or door interface module. One example of such an enclosure is a conventional electrical junction box. The universal mounting ring provides multiple mounting positions for the electronic device relative to a cover assembly which is utilized to provide an aesthetic cover for the content of the enclosure.

In one embodiment the universal mounting ring comprises a generally planar arcuate plate with three downwardly depending mounting tabs. The radius of curvature for the arcuate plate is the same or substantially similar to the radius for a conventional cylindrical junction box. The arcuate plate includes multiple cutouts to allow access to screw bores formed in the side walls of the enclosure or junction box. In this manner, a conventional mounting bracket may be secured to the junction box by way of screws that engage the mounting bracket and pass through the cutouts in the arcuate plate and are secured within the screw bores formed in the enclosure or junction box. Other aspects of the present disclosure include mounting schemes such as snaps, adhesives, clips, pins, hook and loop fasteners and others as an alternative to or for use in combination with traditional mounting mechanisms such as screws. According to such embodiments, the arcuate plate may be altered as needed to accommodate such alternative mounting schemes. Downwardly depending mounting tabs provide three mounting positions for a reader, although it should be appreciated that fewer or more mounting positions may be provided. Because the arcuate plate fits between the upper edge of an enclosure or junction box and a conventional mounting bracket, any cover assembly that interfaces with a conventional mounting bracket may be utilized to cover the reader as positioned on or within the enclosure. This provides significant aesthetic functionality by permitting the cover assembly for the reader to match cover assemblies for other enclosures or junction boxes in the same vicinity and throughout a building. It should be appreciated that the universal mounting ring would also work with custom mounting brackets in addition to conventional mounting brackets. Because the universal mounting ring permits access to the screw bores in a conventional junction box, the universal mounting ring will work with virtually any mounting bracket and cover plate designed to interface with the screw bores in a junction box or other type of electrical enclosure. According to aspects of the present disclosure, the mounting plate may also be adapted to connect with the cover assembly in non-traditional ways, including but not limited to glues, adhesives, snaps, hook and loop style fasteners, clips, pins, etc.

The universal mounting ring also permits the reader to be positioned within the enclosure or junction box at different positions spaced from the cover assembly. This is important for multiple reasons. For example, cover assemblies for electrical enclosures and junction boxes come in a wide variety of configurations and the inner surface of the cover assemblies may vary in structure and structural relative thickness. Accordingly, different thicknesses and structural configurations can be accomplished by adjusting the position of the reader relative to the inner surface of the cover assembly. In addition, performance of the device, for example read range for a reader, may also be adjusted by positioning the electronic device at different positions within the enclosure. Depending upon the particular circumstances for the reader installation, and the type of reader being used, including its performance characteristics, it may be desirable to adjust the read range by changing the position of the reader among the available mounting positions. Moreover, and also with respect to read range and performance, when a metal mounting bracket is used, in a preferred embodiment, the mounting bracket should be cut to form a gap or slot across the body of the mounting bracket such that the mounting bracket does not form a continuous loop of metal. By doing so, the read range of the reader will be improved. Further still, adjusting the position of the electronic device within the enclosure also permits adding additional components, for example, a liquid crystal display (" LCD") or other display, within the enclosure. As will be appreciated by those of skill in the art, adding a display to the functionality of the electronic device can enhance the functionality of the electronic device.

In an alternative embodiment, the mounting ring has a different configuration, for example, a "C-shape" or "U-shape." In addition, the downwardly depending mounting tabs may have a different configuration. Importantly, consistent with prior embodiments, the mounting tabs include multiple spaced mounting positions for an electronic module or device and permit the electronic module to be positioned at different spaced locations relative to the cover assembly, including a position fully or partially recessed within a wall thereby allowing the relative thickness or profile of the cover assembly to vary for either or both functional and/or aesthetic purposes and allowing the position of the electronic module to vary for functional purposes.

The invention is defined by the independent claims. Further developments of the invention are recited in the dependent claims.

### BRIEF DESCRIPTION OF THE DRAWINGS

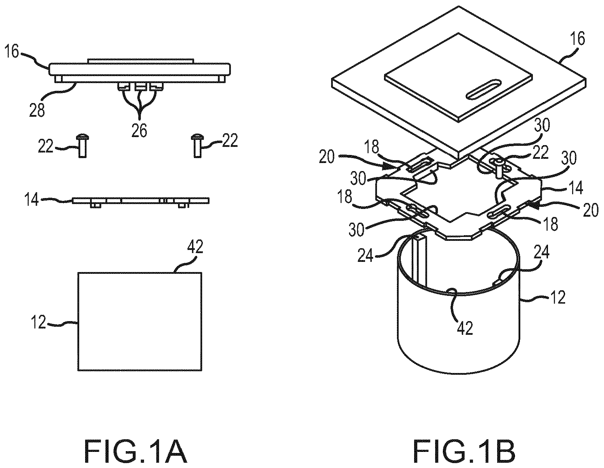

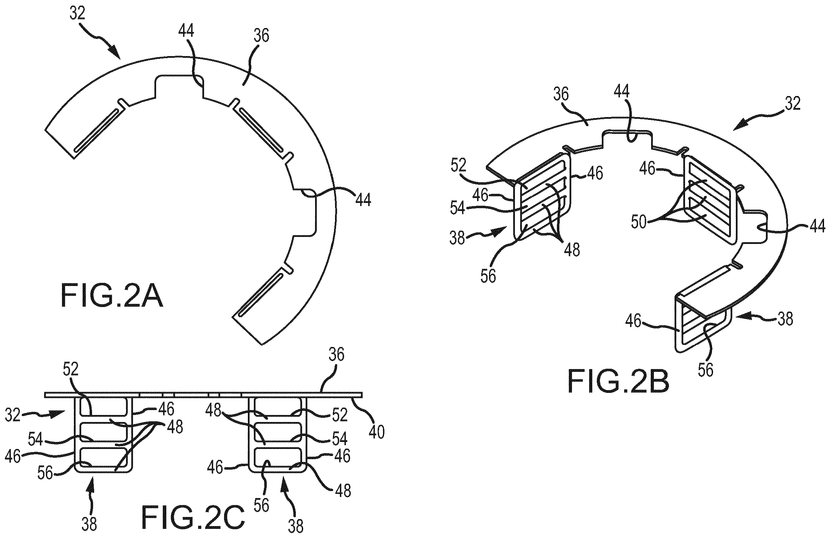

The accompanying drawings, which are incorporated in and constitute a part of the specification, illustrate embodiments of the invention and together with the general description of the invention given above and the detailed description of the drawings given below, serve to explain the principles of these inventions; Figures 1A and 1B refer to a conventional prior art, Figures 2A-7 refer to embodiments no longer covered by claims.
Fig. 1A is an exploded front plan view of a conventional electrical junction box, mounting bracket and cover plate assembly.
Fig. 1B is an exploded perspective view of the components shown in Fig. 1A.
Fig. 2A is a top plan view of one embodiment of a universal mounting ring.
Fig. 2B is a perspective view of the universal ring mount shown in Fig. 2A.
Fig. 2C is a front elevation view of the universal ring mount shown in Fig. 2A.
Fig. 3A is an exploded front plan view of a conventional electrical junction box, an electronic device, such as an RFID reader, a universal mounting ring as shown in Fig. 2A, a mounting bracket and a cover plate,
Fig. 3B is a perspective view of the embodiment of Fig. 3A.
Fig. 4 is a top perspective view of an assembled electric junction box, universal mounting ring and reader shown in Fig. 3A, with the junction box shown in phantom.
Fig. 5 is a top perspective view of an assembled junction box, reader, universal mounting ring and mounting bracket as shown in Fig. 3A.
Fig. 6 is a front elevation view of an assembled junction box, reader, universal mounting ring, mounting bracket and cover assembly, with the junction box shown in phantom, and further showing the reader at a position farthest removed from the cover assembly.
Fig. 7 is a front elevation view of the embodiment of Fig. 6, and further showing the reader at a position closest to the cover assembly.
Fig. 8 is an exploded front perspective view of an alternative embodiment of a mounting bracket and electronic module.
Fig. 9A is an exploded perspective view of the components shown in Fig. 8, as a subassembly, with an electrical junction box.
Fig. 9B is an exploded rear perspective view of the components shown in Fig. 9A. Fig. 10 is an exploded front perspective view of the component shown in Fig. 9A, as a subassembly.
Fig. 11 is an exploded front perspective view of the subassembly shown in Fig. 10, with a cover plate.
Fig. 12 is a front perspective view of the components shown in Fig. 11, assembled together.
Fig. 13A is a top plan view of the embodiment shown in Fig. 10, with the electrical junction box shown in cross-section, and the electronic module located in a first position relative to the mounting bracket.
Fig. 13B is a top plan view of the embodiment shown in Fig. 10, with the electrical junction box shown in cross-section, and the electronic module located in a second position relative to the mounting bracket.
Fig. 14A is a top plan view of the embodiment shown in Fig. 13A, mounted within a wall.
Fig. 14B is a top plan view of the embodiment shown in Fig. 13B, mounted within a wall.
Fig. 15A is a top plan view of the embodiment shown in Fig. 14A, with a cover assembly.
Fig. 15B is a top plan view of the embodiment shown in Fig. 14B, with a cover assembly.
Fig. 16A is a side elevation view of an alternative embodiment of the universal mounting ring.
Fig. 16B is a side elevation view of an alternative embodiment of the universal mounting ring.
Fig. 16C is a side elevation view of an alternative embodiment of the universal mounting ring.

It should be understood that the illustrated embodiments are depicted with a conventional cylindrical electrical junction box. It should be appreciated that the invention is not limited to such junction boxes but is adapted to work with almost any electrical enclosure, including rectilinear enclosures. It should further be appreciated that an RFID reader is illustrated but that the embodiments of the present invention may be utilized with a variety of electronic devices other than readers, including but not limited to miniature controllers or door interface modules. It should also be appreciated that the drawings are not necessarily to scale. In certain instances, details that are not necessary for an understanding of the invention or that render other details difficult to perceive may have been omitted. It should be understood, of course, that the invention is not necessarily limited to the particular embodiments illustrated herein.

### DETAILED DESCRIPTION

For simplicity in understanding, the present disclosure is described and illustrated with respect to use with an RFID reader. It should be appreciated that the universal mounting ring may be used with all types of access control readers, including both contactless and contact readers, as well as other types of electronic devices, including miniature controllers and door interface modules.

One embodiment of a prior art electrical junction box 12, mounting bracket 14 and cover assembly 16 is shown in Figs. 1A and 1B. The junction box 12 is designed to hold an electronic component, such as a light switch. The cover assembly 16 provides an aesthetic closure and finish that covers the contents of the junction box 12. The mounting bracket 14 is attached to the junction box 12 and, in turn, the cover assembly 16 is affixed to the mounting bracket 14. More specifically, a slot 18 is formed in each side or leg 20 of the mounting bracket 14 through which screws 22 extend and threadably engage screw bores 24 formed along the inside surface of the junction box 12. As shown, two screw bores 24 are positioned at opposite sides of the junction box 12. Typically, the cover assembly 16 is designed to engage the mounting bracket 14 with a friction fit. As seen in Fig. 1A, downwardly depending tabs 26 extend from the inner surface 28 of the cover assembly 16 to engage one or more edges 30 of the mounting bracket. Different methods and structures for attaching a cover assembly 16 to a mounting bracket 14 are known to those of skill in the art. Such different structures and methods vary and in some structures the connecting components extend different depths into the interior of the junction box 12 from the inner surface 28 of the cover assembly 16.

Turning to Figs. 2A-7, one embodiment of a universal mounting ring 32, no longer covered by the claims, is illustrated. The universal mounting ring 32 is designed to secure an electronic device for example an RFID reader 34, within a conventional electrical junction box 12 and also interface with a conventional mounting bracket 14 to secure a cover assembly 16 for the reader 34 over the electrical junction box 12. As illustrated, the universal mounting ring 32 comprises a partial arcuate plate 36 and a plurality of mounting tabs 38 extending generally perpendicular to the plane of the arcuate plate 36. In one embodiment, the radius of the curvature of the arcuate plate 36 is the same as or nearly similar to that of the cylindrical junction box 12 such that the lower surface 40 of the arcuate plate 36 may rest upon the upper edge 42 of such a junction box. One or more cutouts 44 are formed in the arcuate plate 36 to provide access to screw bores 24 provided on the inside wall of a junction box 12. The orientation or placement of multiple cutouts is arranged on the arcuate plate 36 to facilitate use of the arcuate plate with junction boxes having either a circular or rectangular opening.

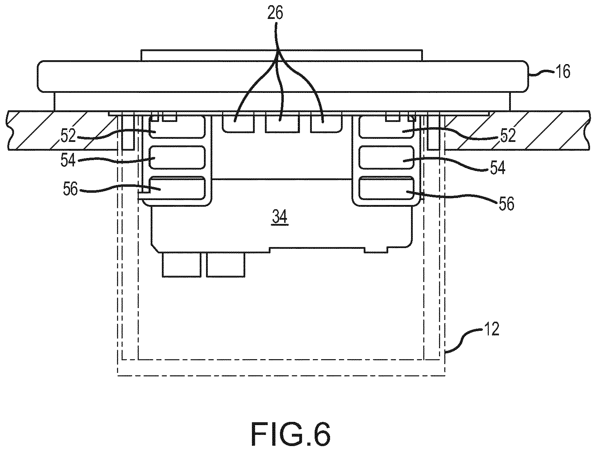

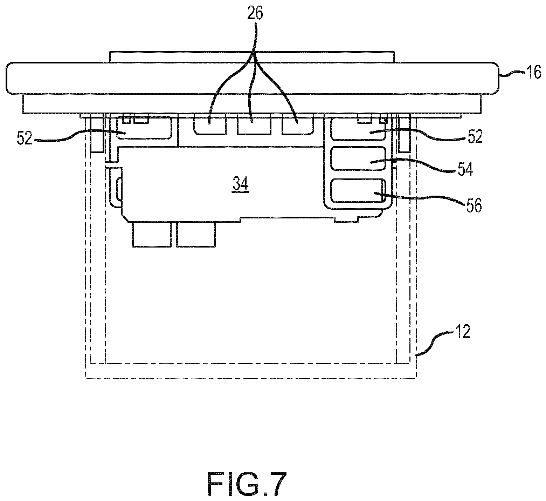

The downwardly depending mounting tabs 38 are generally ladder-shaped. For example, as shown in Figs. 2B and 2C, each tab 38 comprises two legs 46 extending from the arcuate plate 36 and oriented generally parallel to each other. Multiple cross members 48 extend between the two legs 46 to define notches 50 which are adapted to receive a complementary portion of a reader 34. Each cross-member 48 provides a separate mounting position and, in a preferred embodiment, multiple mounting positions are provided on each tab 38. A first mounting position 52 is generally proximate the underneath surface of the arcuate plate 36. As illustrated, each successive mounting position 54, 56 repositions the reader 34 a farther distance from the arcuate plate 36. Positioning the reader 34 relative to the arcuate plate 36 in the various mounting positions can alter the read range of the reader 34. Altering the read range of the reader 34 may be necessary for security reasons or for other reasons known to persons of ordinary skill in the art. In addition, the ability to position the reader at various depths or locations within the junction box allows greater flexibility in the selection and use of different cover assemblies 16. As previously noted, cover assemblies 16 are constructed differently and have different assembly structures that extend different depths or distances into the junction box 12. The ability to alter and adjust the position of the reader 34 relative to the cover assembly 16 has the added benefit of allowing use of a greater number of variety of cover assemblies 16 from different manufactures or vendors. Fig. 6 shows a reader 34 mounted farthest from the cover assembly 16. Fig. 7 shows a reader 34 mounted closest to the cover assembly 16.

It should be appreciated that more than three mounting positions may be included on each mounting tab 38. Similarly, three mounting tabs 38 are not required. Rather, typically at least two tabs 38 would be required without additional structure for securing the reader relative to the arcuate plate. It is contemplated that a single mounting tab 38 could be utilized in combination with a positive latching or securing mechanism. In addition, the mounting tabs 38 do not need to be "ladder" shaped, but may be any configuration that will cooperate with and secure the position of a reader.

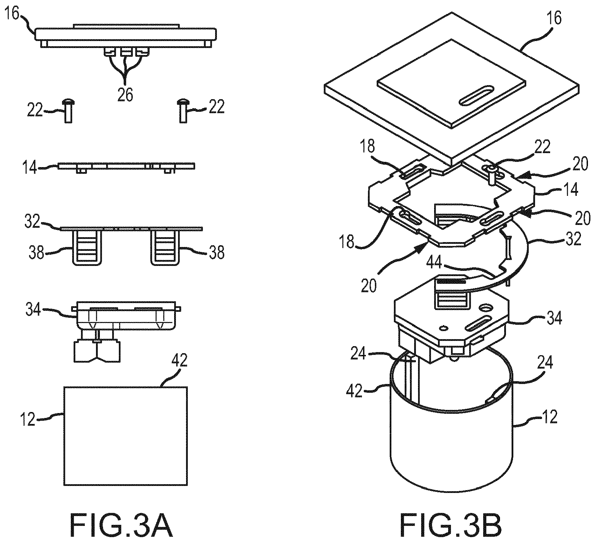

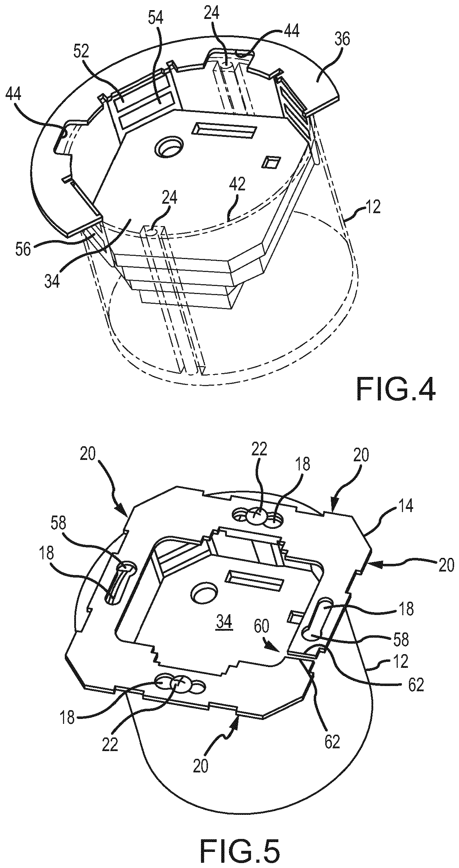

As shown in Figs. 3A and 3B, the arcuate plate 36 and reader 34 may be assembled in a conventional junction box 12. The arcuate plate 36 is adapted to accommodate and interface with a square mounting bracket 14. As shown in Fig. 4, a reader 34 is secured to the arcuate plate 36 and the arcuate plate 36 and reader 34 are positioned in the junction box 12. The arcuate plate 36 is oriented with the cutouts 44 to provide access to the screw bores 24 of the junction box 12. A mounting bracket 14 is then positioned over the arcuate plate 36 and secured to the junction box 12. More particularly, as shown in Fig. 5, two screws 22 pass through slots 18 to engage the screw bore 24 in the side wall of an electrical junction box 12. In the embodiment illustrated, the slots 18 are shaped with an enlarged end 58 to receive the head of a screw. The mounting bracket is then rotated such that the screw head is positioned within the narrow portion of the slot 18 and the screw is tightened. Securing the mounting bracket 14 to the junction box 12 simultaneously secures the arcuate plate 36 relative to the junction box 12.

The reader 34 cover assembly 16 is secured directly to the mounting bracket 14 by means known to those of skill in the art. As a result of the use of a universal mounting ring 32, the reader 34 cover assembly 16 may be mounted flush with the surface of the wall to provide a pleasing aesthetic look.

As can further be seen in Fig. 5, in at least one embodiment, one leg or side 20 of the mounting bracket 14 is cut completely through to form a slot 60 in the mounting bracket. The purpose of the slot 60 is to prevent the mounting bracket 14 from forming a continuous loop of metal. In addition, the slot 60 should be oriented such that it is not positioned on top of the arcuate plate 36. The slot 60 should be oriented in an open area with no other component or piece of metal interconnecting the opposed edges 62 of the slot. Forming a slot 60 completely through one side 20 substantially reduces interference with the reader antenna and read range of the reader is improved.

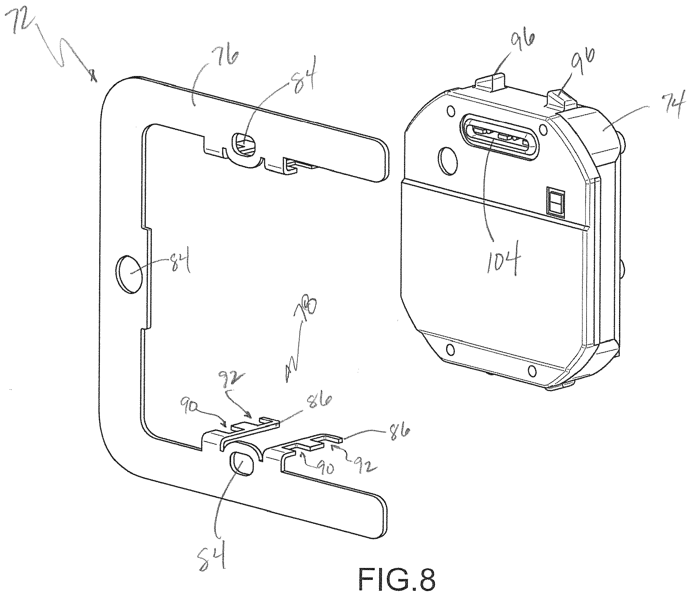

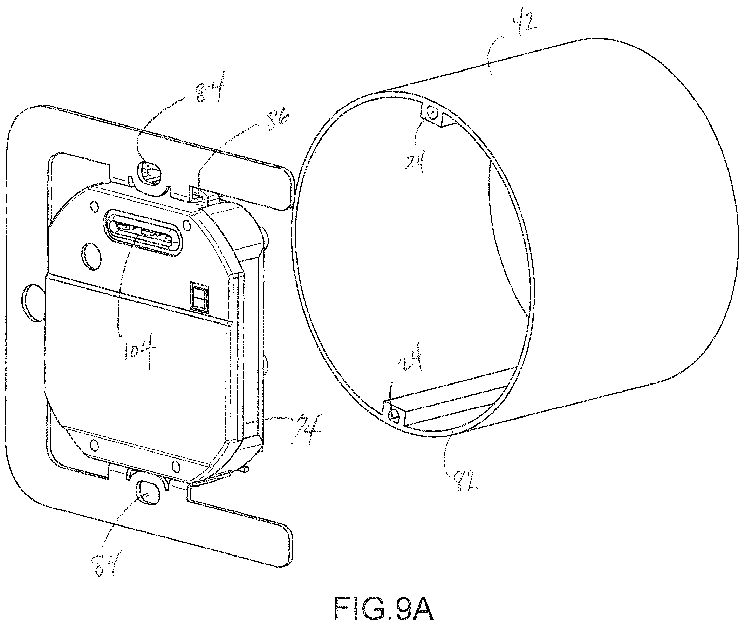

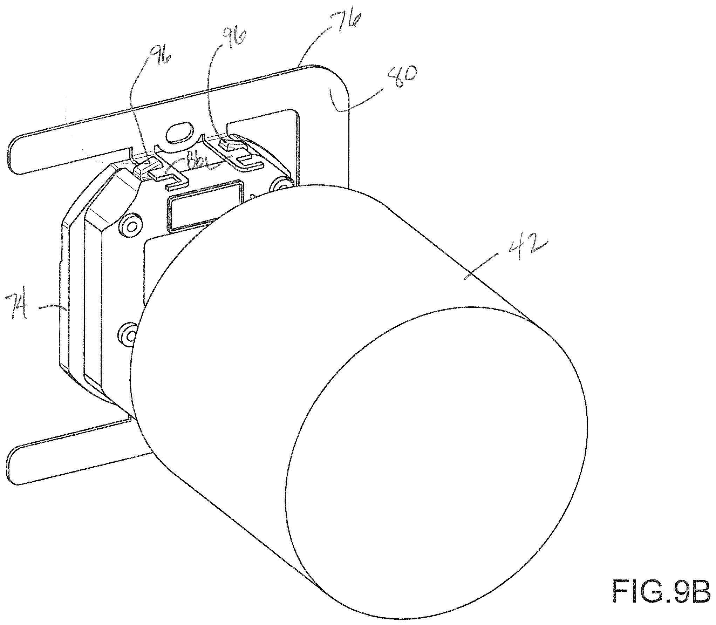

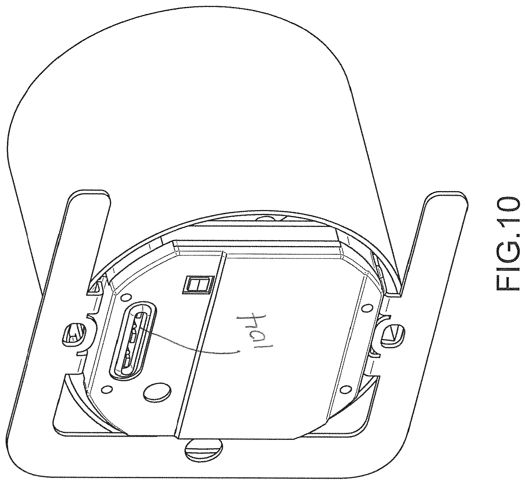

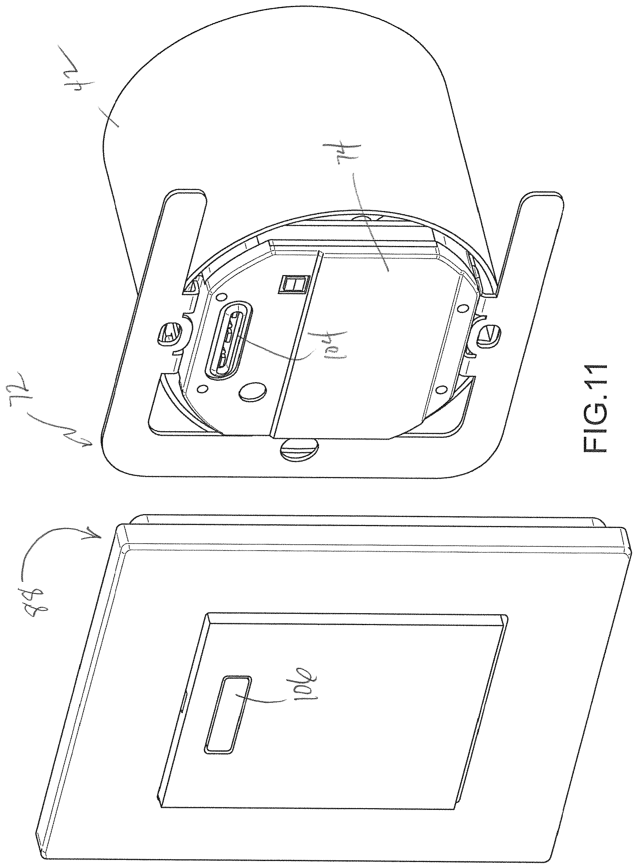

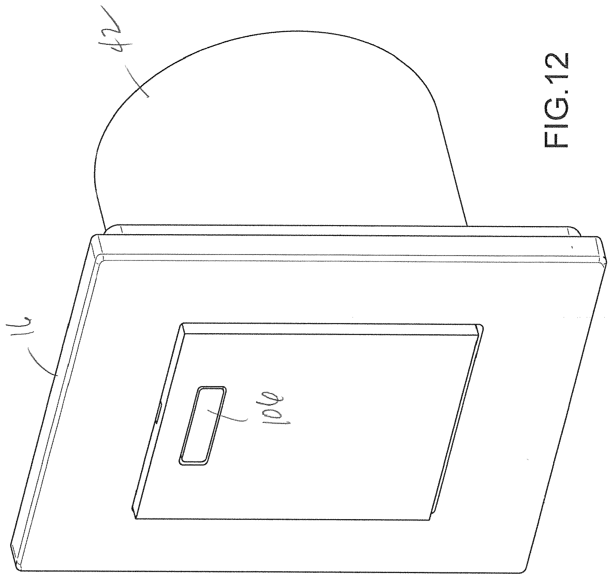

Figs. 8-14 illustrate the present invention. A mounting ring 72 and electronic module 74 are shown. Here, the mounting ring 72 is more rectilinear in shape than the embodiment shown in Fig. 2B, for example. As depicted, the mounting ring 72 has a U-shaped or C-shaped plate 76 with downwardly depending or extending mounting tabs 78. The lower surface 80 of the plate 76 abuts the upper edge 82 of the junction box 42, as seen in Figs. 9A, 9B and 10. Cut outs 84 are formed in the plate 76 to permit screws 22 to secure the plate 76 to the junction box 42 by way of screw bores 24 formed in the junction box 42. Other mounting schemes, such as snaps, adhesives, clips, pins, hook and loop fasteners, etc., may be used as an alternative to or for use in combination with the screws 22. As shown in Figs. 11 and 12, a cover assembly 16 connects directly to the mounting ring 72 or a mounting bracket (not shown) may be positioned between the mounting ring 72 and cover assembly 16 to facilitate the interconnection.

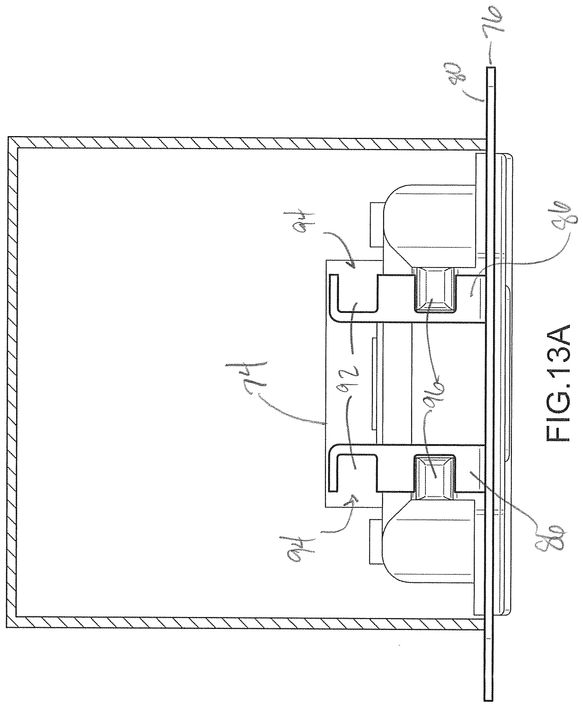

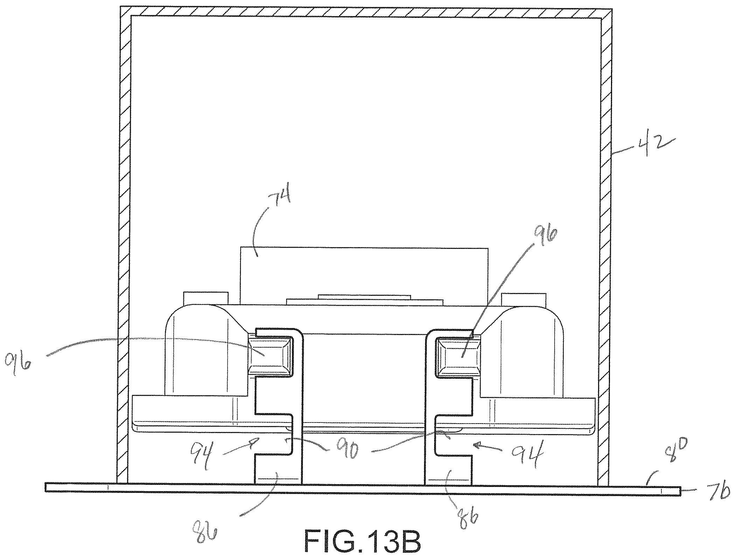

As shown in Figs. 8, 9B, 13A and 13B, the mounting tabs 78 according to the present invention comprise legs 86. The legs 86 are independent, compared to the interconnected legs 46 of the embodiments no longer covered by claims. As shown, each leg 86 includes two notches 90 and 92. Fig. 13A shows the electronic device 74 positioned in the notches 90, closest to the plate 76. Fig. 13B shows the electronic device 74 positioned in the notches 92, farther from the plate 76. More particularly, the notches 90 and 92 in each pair of legs 86 are oriented such that the openings 94 face away from or opposite of the opening in the associated other notch. As shown in Fig. 8, a pair of extensions 96 are formed in the body of the electronic device 74 which are designed to fit in and engage the notches. In this embodiment, the pairs of extensions 96 are formed on opposite sides of the electronic device 74, but could be formed at different locations on the body of the electronic device 74. The extensions 96 connect to the notches 90 and 92 by friction or snap fit. For example, as shown in Fig. 9B, the notches 90 and 92 and the extensions 96 have a generally rectilinear shape such that the extensions 96 fit securely in each notch. The outer surfaces 98 of the extensions preferably abut the inner surfaces 100 of the notches to secure the electronic device 74 in place. It should be appreciated that the shape of the notch and extension need not be rectilinear, but could be any other shape that would facilitate a friction or snap fit connection, for example an arcuate or polygon shape.

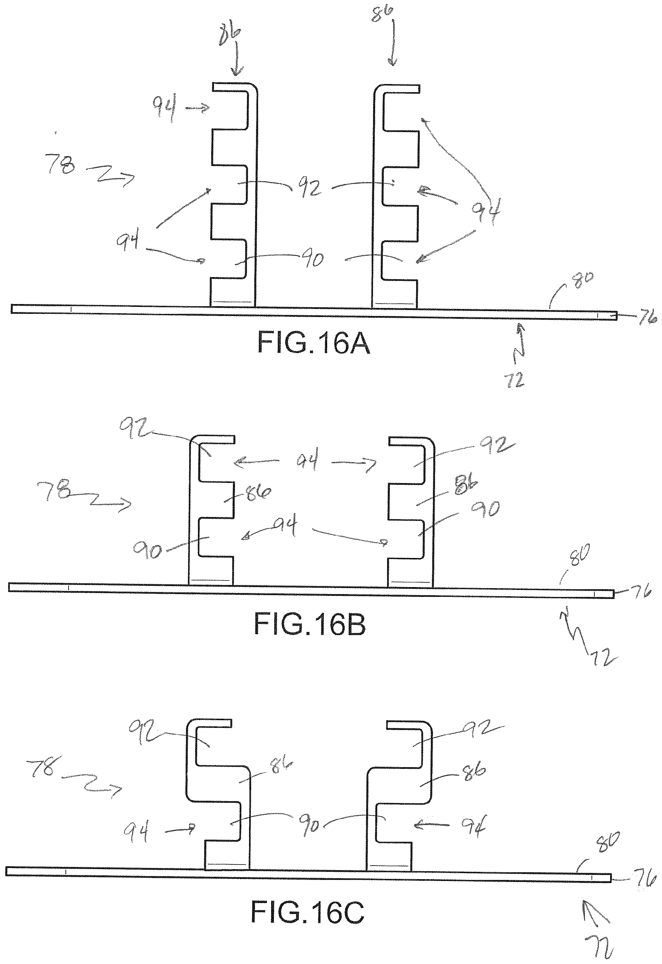

Additional pairs of notches, positioned along the length of the legs 86, such as shown in Fig. 16A, may be added. As a result, the electronic device 74 may be positioned farther from the plate 76. Further still, additional configurations could also be utilized. For example, the open side 102 of the notches 90 and 92 could face toward each other, as shown in Fig. 16B, rather than away from each other as shown in Figs. 13A and B. Alternatively, the direction of the notches may face in the opposite directions, such as shown in Fig. 16C. In the embodiments of Figs. 16A-16C, it is important that the corresponding notches on each leg within in each pair of legs have the respective openings face either toward or away from each other.

As shown in Fig. 11, the electronic device may optionally include a connector 104 to interconnect with an electronic display 106 in the cover assembly 16. A wide variety of information may be conveyed via the display, including but not limited to, information related to access that could inform or assist a user, and information that assists a technician for installation, maintenance and upgrade.

Figs. 9A and 9B show the electronic device 74 connected to the universal mounting ring 72, and positioned to be connected to a junction box 42. Fig. 10 illustrates the electronic device 74, mounting ring 72 and junction box 42 interconnected. As further shown, the connector 104 is positioned to interconnect with a complimentary connector (not shown) mounted in the cover assembly 16. Fig. 11 illustrates a cover assembly 16 positioned to interconnect to the mounting ring 72 and electronic device 74. An electronic display 106 is shown on the face of the cover assembly 16 and is available to display information from the electronic module 74. Fig. 12 illustrates an electrical assembly comprising a cover assembly 16, interconnected to an electronic device 72 and mounting ring 72, which are, in turn, interconnected to a junction box 42.

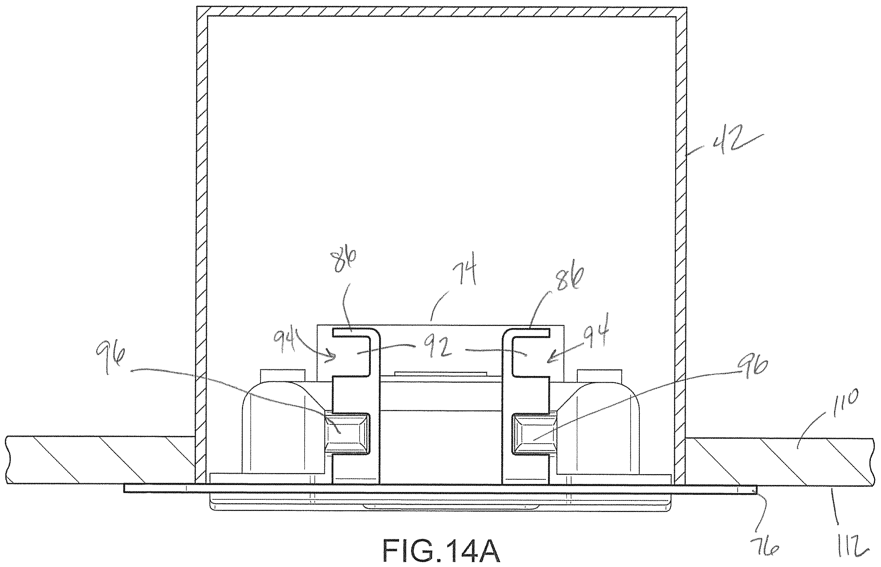

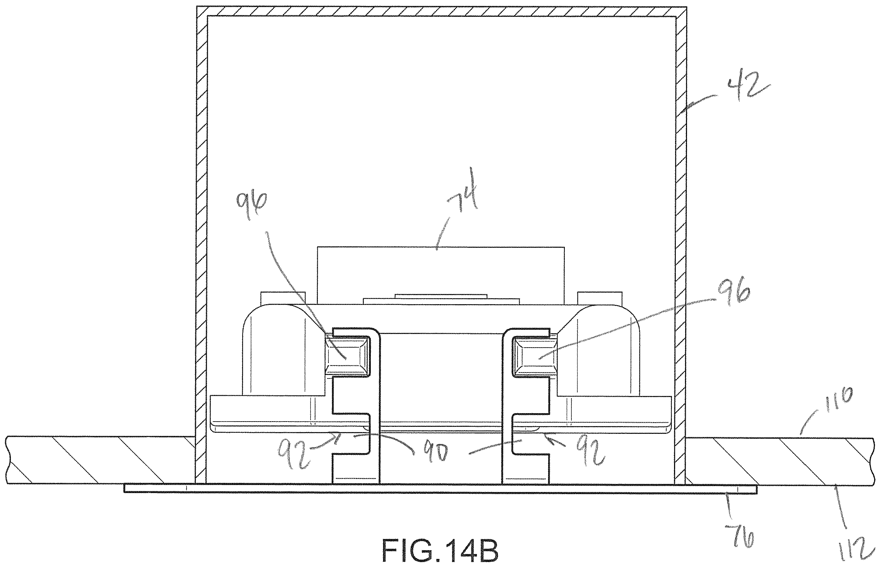

Figs. 14A and 14B illustrate two specific installations according to independent claims 1 and 6 of the present invention.

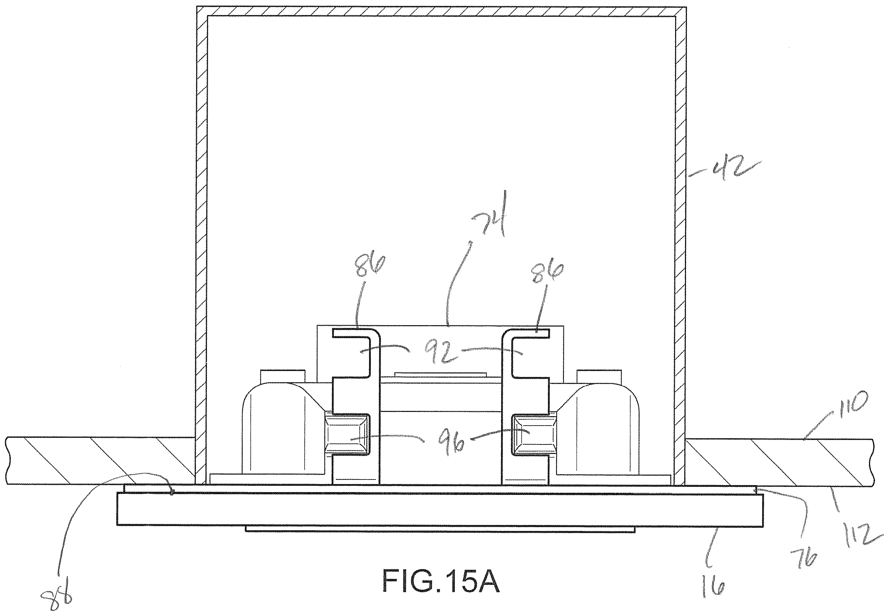

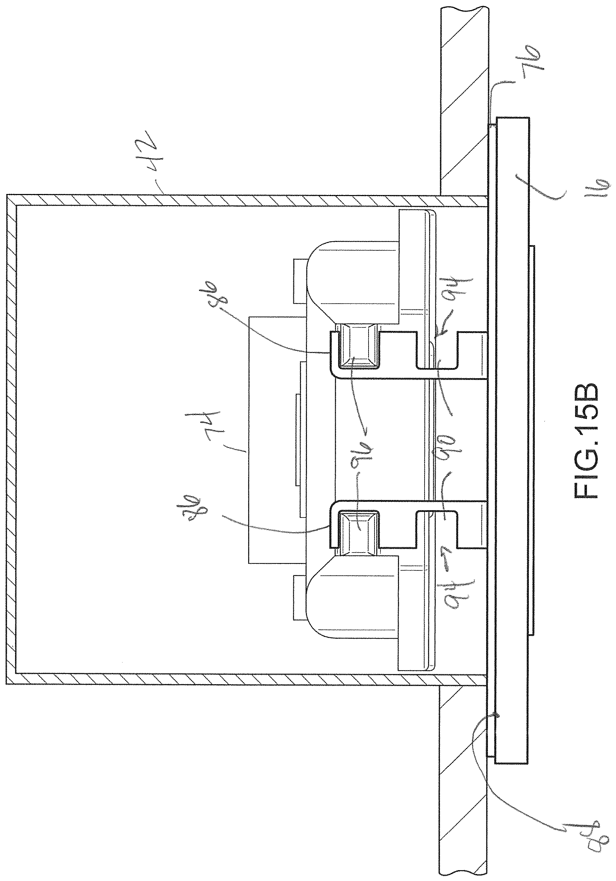

In Fig. 14A, an electronic enclosure 108 is shown comprising a junction box 12, an electronic device or module 74, a mounting ring 72 and a cover assembly 16. The junction box 12 is mounted relative to a wall 110 such that the electronic device 74 is fully recessed relative to the outer or exposed surface 112 of the wall 110. Fig. 14A illustrates an installation where the electronic device 74 is secured in notches 90, which define a first mounting position with the electronic device 74 extending partially out of the junction box 42. Fig. 14 B illustrates an installation where the electronic device 74 is secured in notches 92, which define a second mounting position with the electronic device 74 positioned fully inside the junction box 42. In both instances, the under surface 80 of the universal mounting plate 76 abuts the exterior surface 112 of the wall 110. Figs. 15A and 15B correspond to Figs. 14A and 14B, respectively, except that cover assembly 16 is added. It should be appreciated that the cover assembly 16 may be sized to fit completely over the universal mounting plate 76 such that the inner side 88 of the cover assembly 16 abuts the exterior surface 112 of the exterior wall. According to other aspects of the present disclosure, the cover assembly 16 may be mounted to the mounting plate 76 such that the exterior surface 120 of the cover assembly 16 is flush with the exterior surface 112 of the exterior wall. Further still, the aesthetics of the cover assembly 16 may replicate that of the surrounding wall such that that cover assembly is effectively hidden or camouflaged. It should further be appreciated that the position of the notches 90 and 92 relative to the legs 86 may vary, as well as the relative spacing between the notches 90 and 92 on the leg 86. The notches may be closer and/or farther from the plate 76 and may be spaced closer together and/or farther apart, uniformly or non-uniformly. For example, the size and type of electronic device that will be utilized can influence the spacing of the legs 86 relative to each other, the location of the legs 86 relative to the plate 76, and the spacing of the notches relative to each other. Unlike the embodiments of the present invention, conventional RFID reader assemblies are typically mounted to the exterior of a wall, rather than recessed within a wall. As a result, the entirety of the reader assembly, including the electronic module, reader housing and cover assembly are positioned exterior to the wall and have a relatively obtrusive profile. For example, the inner side of the cover plate 114 may be positioned in contact with the exterior surface 112 of the wall 110. The designs encompassed by the present invention permit the electronic device to be recessed within a wall, thereby offering greater flexibility to engineers and designers for designing cover assemblies and improving functional performance or user benefit. Figs. 1, 12, and 15A and 15B illustrate a relatively thin cover assembly 16. One benefit is to design less obtrusive cover assemblies and/or cover assemblies that match other hardware within the same physical space or even blend into the wall so as to be obscure. The latter allows for covert knowledge of the actual reader location and access benefits thereof. A flush or nearly flush mounted reader reduces the chances of non-intended environmental exposure, such as flame, chemical, dust or water. Additionally, a flush or nearly flush mounted reader can reduce malicious attacks or damage where physical leverage is used to attempt to pry the reader from the enclosure. While various embodiments of the present invention have been described in detail, it is apparent that modifications and alterations of those embodiments will occur to those skilled in the art. However, it is to be expressly understood that such modifications and alterations are within the scope and spirit of the present invention, as set forth in the following claims. Other modifications or uses for the present invention will also occur to those of skill in the art after reading the present disclosure. Such modifications or uses are deemed to be within the scope of the present invention.

## Claims

1. A system comprising a universal mounting ring (72) and an electronic device (74), the electronic device (74) comprising a body, the universal mounting ring comprising:
a. a planar U-shaped plate (76) having a width, an outer perimeter edge and an inner perimeter edge; and
b. at least one mounting tab (78) comprising two parallel legs (86) extending perpendicular to the U-shaped plate (76), a plurality of open-sided notches (90, 92) formed in each leg defining a plurality of mounting positions and frictionally engaging extensions (96) extending outwardly from the body of the electronic device (74); and wherein each mounting position is located a different distance from the U-shaped plate (76).

2. The system of claim 1, wherein the openings of the notches (90, 92) in one leg of the at least one mounting tab (78) face away from the opening of the notches (90, 92) in the other leg of the same at least one mounting tab (78).

3. The system of claim 1, wherein the openings of the notches (90, 92) in one leg of the at least one mounting tab (78) face toward the openings of the notches (90, 92) in the other leg of the same at least one mounting tab (78).

4. The system of claim 1, wherein the open side for all notches (90, 92) on each leg of the at least one mounting tab (78) face in the same direction.

5. The system of claim 1, wherein the at least one mounting tab (78) comprises at least three mounting positions.

6. An electrical assembly, comprising:
a. a universal mounting ring (72) adapted to connect to a junction box, the mounting ring comprising a plate (76) and at least two mounting tabs (78) extending perpendicular to the plate, each mounting tab comprising two separate and disconnected legs (86), and each leg having at least two open sided notches (90, 92);
b. an electronic device (74) having a body with at least a first and second pair of extensions (96), the first pair of extensions adapted to frictionally connect to one notch on each of the two legs (86) of a first mounting tab, the second pair of extensions adapted to frictionally connect to one notch on each of the two legs (86) of a second mounting tab of the universal mounting ring (72); and
c. a cover assembly (16) adapted to be connected to the universal mounting ring (72), the cover assembly having an inner side and an outer side, and wherein, when the junction box is mounted in a wall and the universal mounting ring is connected to the junction box, the electronic device (74) is spaced from the cover assembly and repositionable fully or partially inside the junction box and the cover assembly is positioned on the opposite side of the universal mounting ring (72) from the electronic device (74) with the inner surface of the cover assembly proximate the outer surface of the wall.

7. An electrical enclosure comprising:
a. a junction box (12) configured to be mounted within a wall; and
b. the electrical assembly in accordance with claim 6.

8. The electrical enclosure of claim 7, wherein the openings of the notches (90, 92) in one leg of the at least two mounting tabs (78) face away from the opening of the notches (90, 92) in the other leg of the at least two mounting tabs (78);
or wherein with respect to a pair of legs comprising each mounting tab (78), the openings of the notches (90, 92) in one leg face toward the openings of the notches (90, 92) in the other leg.

9. The electrical enclosure of claim 7, wherein the open side for all notches (90, 92) on each leg of the at least two mounting tabs (78) face in the same direction.

10. The electrical enclosure of claim 7, further comprising three mounting tabs (78); and wherein the inner surface of the cover assembly (16) contacts the outer surface of the wall.

11. A method of using the system of claim 1, wherein the universal mounting ring comprises at least two mounting tabs and the electronic device is a radio frequency identification reader, the method comprising:
a. securing the radio frequency identification reader (74) to the at least two mounting tabs (78) of the universal mounting ring;
b. positioning the universal mounting ring (72) and the radio frequency identification reader (74) in an electrical enclosure, wherein the electrical enclosure is positioned at least partially inside a wall, and wherein the wall has an exterior surface; and
c. positioning a cover assembly (16) over the universal mounting ring (72) such that the cover assembly abuts the exterior surface of the wall and the radio frequency identification reader (74) is positioned inside the wall.

12. A method of using the electrical assembly of claim 6, wherein the electronic device is a radio frequency identification reader, the method comprising:
a. securing the radio frequency identification reader (74) to the at least two mounting tabs (78) of the universal mounting ring;
b. positioning the universal mounting ring (72) and the radio frequency identification reader (74) in an electrical enclosure, wherein the electrical enclosure is positioned at least partially inside a wall, and wherein the wall has an exterior surface; and
c. positioning the cover assembly (16) over the universal mounting ring (72) such that the cover assembly abuts the exterior surface of the wall and the radio frequency identification reader (74) is positioned inside the wall.

13. The method of claim 11 or 12, wherein attaching the cover assembly (16) to the mounting bracket further comprises positioning a portion of the cover assembly (16) flush with the surface of a wall.

14. The method of claim 11 or 12, comprising adjusting the performance of the radio frequency identification reader by repositioning the radio frequency identification reader (74) relative to the at least two mounting tabs (78).

15. The method of claim 11 or 12, wherein the radio frequency identification reader (74) is one of a contact reader, a contactless reader, a miniature controller and a door interface module;
or wherein the radio frequency identification reader is positioned inside the electrical enclosure.

## Patentansprüche

1. System mit einem Universalmontagering (72) und einer einen Körper aufweisenden Elektronikvorrichtung (74), wobei der Universalmontagering aufweist:
a. eine ebene U-förmige Platte (76) mit einer Breite, einer Außenumfangskante und einer Innenumfangskante; und
b. mindestens eine Montagezunge (78) mit zwei parallelen Füßen (86), die sich senkrecht zu der U-förmigen Platte (76) erstrecken, wobei mehrere offene Aussparungen (90, 92), die in jedem Fuß ausgebildet sind, mehrere Montagepositionen festlegen und Verlängerungen (96) reibschlüssig aufnehmen, die sich von dem Körper der Elektronikvorrichtung (74) nach außen erstrecken, und wobei jede Montageposition einen anderen Abstand zu der U-förmigen Platte (76) aufweist.

2. System nach Anspruch 1, bei dem die Öffnungen der Aussparungen (90, 92) in einem Fuß der mindestens einen Montagezunge (78) weg von der Öffnung der Aussparungen (90, 92) in dem anderen Fuß derselben mindestens einen Montagezunge (78) zeigen.

3. System nach Anspruch 1, bei dem die Öffnungen der Aussparungen (90, 92) in einem Fuß der mindestens einen Montagezunge (78) zu den Öffnungen der Aussparungen (90, 92) in dem anderen Fuß derselben mindestens einen Montagezunge (78) zeigen.

4. System nach Anspruch 1, bei dem die Öffnungen aller Aussparungen (90, 92) an jedem Fuß der mindestens einen Montagezunge (78) in dieselbe Richtung zeigen.

5. System nach Anspruch 1, bei dem die mindestens eine Montagezunge (78) mindestens drei Montagepositionen aufweist.

6. Elektrische Anordnung mit:
a. einem Universalmontagering (72), der dazu angepasst ist, mit einem Anschlusskasten verbunden zu werden, wobei der Montagering eine Platte (76) und mindestens zwei Montagezungen (78), die sich senkrecht zu der Platte erstrecken, aufweist, wobei jede Montagezunge zwei separate und nicht verbundene Füße (86) aufweist und jeder Fuß mindestens zwei offene Aussparungen (90, 92) aufweist;
b. einer Elektronikvorrichtung (74) mit einem Körper mit mindestens einem ersten und einem zweiten Paar von Verlängerungen (96), wobei das erste Paar von Verlängerungen dazu angepasst ist, reibschlüssig mit einer Aussparung an jedem der zwei Füße (86) einer ersten Montagezunge verbunden zu werden, wobei das zweite Paar von Verlängerungen dazu angepasst ist, reibschlüssig mit einer Aussparung an jedem der zwei Füße (86) einer zweiten Montagezunge des Universalmontagerings (72) verbunden zu werden; und
c. einer Abdeckungsanordnung (16), die dazu angepasst ist, mit dem Universalmontagering (72) verbunden zu werden, wobei die Abdeckungsanordnung eine Innenseite und eine Außenseite aufweist und, wenn der Anschlusskasten in einer Wand montiert ist und der Universalmontagering mit dem Anschlusskasten verbunden ist, die Elektronikvorrichtung (74) von der Abdeckungsanordnung beabstandet und im Inneren des Anschlusskastens vollständig oder teilweise neu positionierbar ist und die Abdeckungsanordnung auf der der Elektronikvorrichtung (74) gegenüberliegenden Seite des Universalmontagerings (72) positioniert ist, wobei sich die Innenfläche der Abdeckungsanordnung in der Nähe der Außenfläche der Wand befindet.

7. Elektrisches Gehäuse mit:
a. einem Anschlusskasten (12), der dazu ausgebildet ist, in einer Wand montiert zu werden; und
b. der elektrischen Anordnung nach Anspruch 6.

8. Elektrisches Gehäuse nach Anspruch 7, bei dem die Öffnungen der Aussparungen (90, 92) in einem Fuß der mindestens zwei Montagezungen (78) weg von der Öffnung der Aussparungen (90, 92) in dem anderen Fuß der mindestens zwei Montagezungen (78) zeigen;
oder bei dem in Bezug auf ein Paar von Füßen, die die jeweilige Montagezunge (78) bilden, die Öffnungen der Aussparungen (90, 92) in einem Fuß zu den Öffnungen der Aussparungen (90, 92) in dem anderen Fuß zeigen.

9. Elektrisches Gehäuse nach Anspruch 7, bei dem die Öffnungen aller Aussparungen (90, 92) an jedem Fuß der mindestens zwei Montagezungen (78) in dieselbe Richtung zeigen.

10. Elektrisches Gehäuse nach Anspruch 7, ferner mit drei Montagezungen (78), und wobei die Innenfläche der Abdeckungsanordnung (16) die Außenfläche der Wand berührt.

11. Verfahren zum Verwenden des Systems nach Anspruch 1, bei dem der Universalmontagering mindestens zwei Montagezungen aufweist und die Elektronikvorrichtung ein Funkfrequenzidentifizierungs-Lesegerät ist, mit folgenden Schritten:
a. Befestigen des Funkfrequenzidentifizierungs-Lesegeräts (74) an den mindestens zwei Montagezungen (78) des Universalmontagerings;
b. Positionieren des Universalmontagerings (72) und des Funkfrequenzidentifizierungs-Lesegeräts (74) in einem elektrischen Gehäuse, wobei das elektrische Gehäuse zumindest teilweise in einer Wand positioniert ist und die Wand eine Außenfläche aufweist; und
c. Positionieren einer Abdeckungsanordnung (16) über dem Universalmontagering (72), sodass die Abdeckungsanordnung an der Außenfläche der Wand anliegt und das Funkfrequenzidentifizierungs-Lesegerät (74) in der Wand positioniert ist.

12. Verfahren zum Verwenden der elektrischen Anordnung nach Anspruch 6, bei dem die Elektronikvorrichtung ein Funkfrequenzidentifizierungs-Lesegerät ist, mit folgenden Schritten:
a. Befestigen des Funkfrequenzidentifizierungs-Lesegeräts (74) an den mindestens zwei Montagezungen (78) des Universalmontagerings;
b. Positionieren des Universalmontagerings (72) und des Funkfrequenzidentifizierungs-Lesegeräts (74) in einem elektrischen Gehäuse, wobei das elektrische Gehäuse zumindest teilweise in einer Wand positioniert ist und die Wand eine Außenfläche aufweist; und
c. Positionieren der Abdeckungsanordnung (16) über dem Universalmontagering (72), sodass die Abdeckungsanordnung an der Außenfläche der Wand anliegt und das Funkfrequenzidentifizierungs-Lesegerät (74) in der Wand positioniert ist.

13. Verfahren nach Anspruch 11 oder 12, bei dem das Befestigen der Abdeckungsanordung (16) an der Montagehalterung ferner Positionieren eines Teils der Abdeckungsanordnung (16), sodass er mit der Oberfläche der Wand abschließt, beinhaltet.

14. Verfahren nach Anspruch 11 oder 12, mit Einstellen der Leistung des Funkfrequenzidentifizierungs-Lesegeräts durch Neupositionieren des Funkfrequenzidentifizierungs-Lesegeräts (74) in Bezug auf die mindestens zwei Montagezungen (78).

15. Verfahren nach Anspruch 11 oder 12, bei dem das Funkfrequenzidentifizierungs-Lesegerät (74) ein Kontaktlesegerät, ein kontaktloses Lesegerät, eine Miniatursteuerung oder ein Türschnittstellenmodul ist,
oder bei dem das Funkfrequenzidentifizierungs-Lesegerät in dem elektrischen Gehäuse positioniert wird.

## Revendications

1. Système comprenant une bague de montage universelle (72) et un dispositif électronique (74), le dispositif électronique (74) comprenant un corps, la bague de montage universelle comprenant :
a. une plaque plane en forme de U (76) ayant une largeur, un bord périphérique extérieur et un bord périphérique interne ; et
b. au moins une patte de montage (78) comprenant deux branches parallèles (86) s'étendant perpendiculairement à la plaque en forme de U (76), une pluralité d'encoches à côtés ouverts (90, 92) formées dans chaque branche définissant une pluralité de positions de montage et des extensions d'engagement par friction (96) s'étendant vers l'extérieur du corps du dispositif électronique (74) ; et dans lequel chaque position de montage est située à une distance différente de la plaque en forme de U (76).

2. Système selon la revendication 1, dans lequel les ouvertures des encoches (90, 92) dans une branche de ladite au moins une patte de montage (78) sont orientées à l'opposé de l'ouverture des encoches (90, 92) dans l'autre branche de la même au moins une patte de montage (78).

3. Système selon la revendication 1, dans lequel les ouvertures des encoches (90, 92) dans une branche de ladite au moins une patte de montage (78) sont orientées vers les ouvertures des encoches (90, 92) dans l'autre branche de la même au moins une patte de montage (78).

4. Système selon la revendication 1, dans lequel le côté ouvert pour toutes les encoches (90, 92) sur chaque branche de ladite au moins une patte de montage (78) est orientée dans la même direction.

5. Système selon la revendication 1, dans lequel ladite au moins une patte de montage (78) comprend au moins trois positions de montage.

6. Ensemble électrique, comprenant :
a. une bague de montage universelle (72) adaptée pour se connecter à une boîte de jonction, la bague de montage comprenant une plaque (76) et au moins deux pattes de montage (78) s'étendant perpendiculairement à la plaque, chaque patte de montage comprenant deux branches séparées et déconnectées (86), et chaque branche ayant au moins deux encoches à côtés ouverts (90, 92) ;
b. un dispositif électronique (74) ayant un corps avec au moins une première et une seconde paire d'extensions (96), la première paire d'extensions étant adaptée pour se connecter par friction à une encoche sur chacune des deux branches (86) d'une première patte de montage, la seconde paire d'extensions étant adaptée pour se connecter par friction à une encoche sur chacune des deux branches (86) d'une seconde patte de montage de la bague de montage universelle (72) ; et
c. un ensemble de couvercle (16) adapté pour être connecté à la bague de montage universelle (72), l'ensemble de couvercle ayant un côté interne et un côté externe, et dans lequel, lorsque la boîte de jonction est montée dans un mur et que la bague de montage universelle est connectée à la boîte de jonction, le dispositif électronique (74) est espacé de l'ensemble de couvercle et repositionnable entièrement ou partiellement à l'intérieur de la boîte de jonction et l'ensemble de couvercle est positionné sur le côté opposé de la bague de montage universelle (72) par rapport au dispositif électronique (74) avec la surface interne de l'ensemble de couvercle proche de la surface externe du mur.

7. Enceinte électrique comprenant :
a. une boîte de jonction (12) configurée pour être montée dans un mur ; et
b. l'ensemble électrique selon la revendication 6.

8. Enceinte électrique selon la revendication 7, dans laquelle les ouvertures des encoches (90, 92) dans une branche desdites au moins deux pattes de montage (78) sont orientées à l'opposé de l'ouverture des encoches (90, 92) dans l'autre branche desdites au moins deux pattes de montage (78) ;
ou dans lequel, par rapport à une paire de branches comprenant chaque patte de montage (78), les ouvertures des encoches (90, 92) dans une branche sont orientées vers les ouvertures des encoches (90, 92) dans l'autre branche.

9. Enceinte électrique selon la revendication 7, dans laquelle le côté ouvert de toutes les encoches (90, 92) sur chaque branche desdites au moins deux pattes de montage (78) est orienté dans la même direction.

10. Enceinte électrique selon la revendication 7, comprenant en outre trois pattes de montage (78) ; et dans laquelle la surface interne de l'ensemble de couvercle (16) est en contact avec la surface externe de la paroi.

11. Procédé d'utilisation du système selon la revendication 1, dans lequel la bague de montage universelle comprend au moins deux pattes de montage et le dispositif électronique est un lecteur d'identification par radiofréquence, le procédé comprenant les étapes consistant à :
a. fixer le lecteur d'identification par radiofréquence (74) sur lesdites au moins deux pattes de montage (78) de la bague de montage universelle ;
b. positionner la bague de montage universelle (72) et le lecteur d'identification par radiofréquence (74) dans une enceinte électrique, dans lequel l'enceinte électrique est positionnée au moins partiellement à l'intérieur d'un mur, et dans lequel le mur a une surface extérieure ; et
c. positionner un ensemble de couvercle (16) sur la bague de montage universelle (72) de sorte que l'ensemble de couvercle bute contre la surface extérieure du mur et que le lecteur d'identification par radiofréquence (74) soit positionné à l'intérieur du mur.

12. Procédé d'utilisation de l'ensemble électrique selon la revendication 6, dans lequel le dispositif électronique est un lecteur d'identification par radiofréquence, le procédé comprenant les étapes consistant à :
a. fixer le lecteur d'identification par radiofréquence (74) auxdites au moins deux pattes de montage (78) de la bague de montage universelle ;
b. positionner la bague de montage universelle (72) et le lecteur d'identification par radiofréquence (74) dans une enceinte électrique, dans lequel l'enceinte électrique est positionnée au moins partiellement à l'intérieur d'un mur, et dans lequel le mur a une surface extérieure ; et
c. positionner l'ensemble de couvercle (16) sur la bague de montage universelle (72) de sorte que l'ensemble de couvercle bute contre la surface extérieure du mur et que le lecteur d'identification par radiofréquence (74) soit positionné à l'intérieur du mur.

13. Procédé selon la revendication 11 ou 12, dans lequel l'attachement de l'ensemble de couvercle (16) au support de montage comprend en outre le positionnement d'une partie de l'ensemble de couvercle (16) au ras de la surface d'un mur.

14. Procédé selon la revendication 11 ou 12, comprenant l'ajustement de la performance du lecteur d'identification par radiofréquence en repositionnant le lecteur d'identification par radiofréquence (74) par rapport auxdites au moins deux pattes de montage (78).

15. Procédé selon la revendication 11 ou 12, dans lequel le lecteur d'identification par radiofréquence (74) est un élément parmi un lecteur à contact, un lecteur sans contact, une commande miniature et un module d'interface de porte ;
ou dans lequel le lecteur d'identification par radiofréquence est positionné à l'intérieur de l'enceinte électrique.
